# EUROPEAN PATENT APPLICATION

(11) **EP 0 731 451 A2**
(43) Date of publication of application: **11.09.1996**
(21) Application number: 96103399.0
(22) Date of filing: 05.03.1996
(51) Int. Cl.: G11B 5/62

(54) **Magnetic disk & method for manufacturing the same and magnetic disk unit obtained by the same**

(30) Priority: 07.03.1995 JP 47652/95
(71) Applicant: HITACHI, LTD., Chiyoda-ku, Tokyo 101 (JP)
(72) Inventor: Nakamura, Takao, Yokohama-shi (JP); Yonekawa, Takao, Odawara-shi (JP); Hagimae, Hiroaki, Chigasaki-shi (JP); Ootake, Mitsuyoshi, Yokohama-shi (JP); Akamatsu, Kiyoshi, Yokohama-shi (JP); Furasawa, Kenji, Hiratsuka-shi (JP); Kato, Akira, Odawara-shi (JP); Kokaku, Yuichi, Yokohama-shi (JP); Ishihara, Heigo, Nishitama-gun, Tokyo (JP); Inomata, Youichi, Odawara-shi (JP); Ohura, Masaki, Odawara-shi (JP)
(74) Representative: Beetz & Partner Patentanwälte

(57) **Abstract**

A magnetic disk (1) which has first and second zones (CSS and data zones) (2, 3), and in which the first zone (2) is formed thereon with a plurality of first projections (4a) isolated from each other and having a predetermined height and second projections (4b) isolated from each other and having a predetermined height lower than the first projections, and the second zone (3) is formed thereon with a plurality of third projections (4c) isolated from each other and having a height lower than the first projections. Separate use of the CSS and data zones ensures a head flying stability of a magnetic head in the data zone and also realizes avoidance of head adhesion and improvement in a CSS characteristic in the CSS zone. Further, surface configurations of CSS and data zones are related to each other to accurately control the magnetic disk, whereby the magnetic disk can perform its smooth seeking operation between the CSS and data zones.

## Description

### BACKGROUND OF THE INVENTION

The present invention relates to a magnetic disk and a method for fabricating the magnetic disk as well as to a magnetic disk unit using the magnetic disk and more particularly, to a technique which can effectively improve head-disk gap and CSS (contact start-stops) characteristics and a sliding durability characteristic such as head adhesion.

In a magnetic disk unit, for example, as an external memory in an information processing system, since an information recording density in a magnetic disk as a medium has, in principle, a relationship inversely proportional to a gap (a height of the magnetic head flying over the magnetic disk with respect thereto) between the magnetic disk and magnetic head, in order to increase a recording capacity of the magnetic disk unit, it is indispensable that a height of flying of the magnetic head off a magnetic disk surface is small.

To this end, there has been recently proposed a magnetic disk unit which has a so-called contact-start-stop (CSS) operation, that is, a magnetic head is placed or rest stationary on a disk as contacted therewith in a stop mode of the magnetic disk unit whereas the magnetic head flies over the rotating disk with a very small gap of 0.1µm-0.2µm spaced therebetween in an operational mode.

With the magnetic disk unit having such a CSS function, there is a risk or danger that, since the magnetic head remains stationary on the magnetic disk as contacted therewith in the stopped state, the magnetic head may stickily adhere to the magnetic disk. For the purpose of improving the CSS characteristics and avoiding the above head adhesion in the CSS mode, in a conventional thin-film magnetic disk, which comprises a magnetic or protective film is subjected to a sputtering or plating process, an aluminum alloy substrate plated thereon with Ni-P is formed thereon to be finely uneven by a texture process with use of abrasive grain.

Meanwhile, in order to attain a high recording density, it is essential to make the magnetic head fly over the disk at a low height. And to make small the surface roughness of the above textured magnetic disk and to avoid any contact between the magnetic head and disk, the roughness of the surface of the magnetic disk is made fine close to mirror-polished surface. In this way, in order to reduce the flying height, it is necessary to decrease the surface roughness of the textured surface. However, the magnetic disk having such a surface configuration has resulted in problems that the CSS frictional force becomes large because the contact area of the magnetic head and disk increases when contacted with the disk in the case of the CSS mode. In an remarkable case, adhesion takes place on the disk, leading to the fact that, when the magnetic disk is started, the adhesion causes a support system of the magnetic head to be broken or causes impossible rotation of a disk driving motor.

There have been proposed various techniques for solving the adhesion problem in a CSS region in which a magnetic head performs its CSS operation. One of such techniques is disclosed in JP-A-4-232614 in which a part of the magnetic head is set as a CSS region for the magnetic head and only the CSS region is formed to have a disk surface of a relatively high surface roughness. This technique, however, merely teaches the fact that, in order to avoid the head adhesion in the CSS mode, the CSS region is made rough.

Also disclosed in JP-A-4-139621 is a technique wherein, in order to solve the above problem, fine abrasive grains injected from a nozzle as carried on compressed air are blown against a CSS zone to provide a surface roughness Rmax of about 0.2 µm, polishing is applied to the CSS zone with use of polishing tape to improve adsorption characteristics in the CSS zone, and a step between the CSS and non-CSS zones is made small to stabilize the flying of a magnetic head.

Other several techniques for forming a magnetic disk to have a finely rough surface but without use of abrasive grain. For example, in JP-A-3-252922, a magnetic disk is subjected to a dry etching process to form a multiplicity of projections having a flat top surface, with desirable values of the height and width of the projection and desirable values of the density and area ratio of the projections. In a technique disclosed in JP-A-5-334665, further, an inner peripheral zone of a magnetic disk allocated as a CSS zone is subjected to a surface formation process in place of the texture process to have a multiplicity of projections thereon, the height of the projections are subscribed, outer peripheral zones allocated as data zones are formed therein with fine narrow grooves with use of abrasive grain, and desirable values for average pitch and maximum height of the fine narrow grooves are also shown.

However, any of these merely techniques disclose the CSS function in the CSS zone of a magnetic disk unit, the head adhesion avoidance, and the uneven surface of the magnetic disk, i.e., the projection height, pitch, area ratio or the maximum height of the uneven surface and the height of the projections, from the viewpoint of satisfying head-disk gap characteristics of these zones.

### SUMMARY OF THE INVENTION

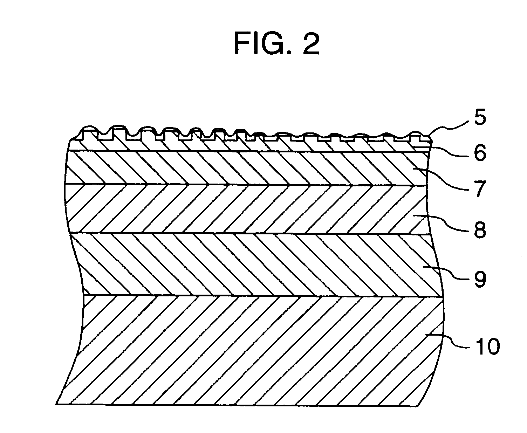

For the purpose of realizing a satisfactory CSS function for a thin-film magnetic disk fabricated by subjecting substrate 10 plated with Ni-P to a sputtering process to form a Cr backing film 8, a Co-series magnetic film 7 and a carbon protective film 6 sequentially on the substrate 10 as shown in Fig. 2; the inventors of the present application have studied a method for providing an uneven surface to the protective film by means of a dry etching process in place of the conventional method for providing an uneven surface to the Ni-P-plated substrate with use of abrasive grain. Further, the inventors have studied such an optimum surface configuration of a disk with a textured surface as to satisfy the head flying characteristics and CSS characteristics as the most important performances of the aforementioned magnetic disk, by measuring the surface of the magnetic disk subjected to a texturing process, and analyzing its obtained surface measurement data to find a surface roughness, a symmetry of the sectional configuration and a load ratio indicative of a contact condition with the magnetic head to thereby improve the CSS function of the magnetic disk unit, avoid head adhesion and to obtain a good head-disk gap characteristic, as disclosed in JP-A-2-285515.

Through our studies, it has been turned out that the conventional magnetic disk having the recording area divided into the CSS and data zones has the following problem and in the technical level of the prior art, it is not always advantageous to divide the recording area into the CSS and data zones.

That is, even when the flying height can be made small in the data zone, the gap has a limit due to the surface roughness in the CSS zone, which results in that, when the magnetic disk is built into the magnetic disk unit, the general head-disk gap cannot be made small. In particular, in an extremely low flying zone where a head flying height from a flying reference surface is 30nm or less, projections on the disk playing a role in avoiding the head adhesion of the CSS zone and reducing the CSS tangential force become one of the causes of impeding reduction of the flying height of the head.

For this reason, even when the flying gap is as large as not to cause the head to come into contact with the disk in the data zone, the head may be brought into contact with the disk in the CSS zone, which may lead to the fact that, when the numbers of starts and stops are increased, the head crashes.

Accordingly, in order to avoid the head adhesion and satisfy the CSS characteristic in the CSS zone and to secure a low head-disk gap and its flying stability in the data zone, it becomes vital to accurately control the head according to an associated relationship between the surface configurations of the CSS and data zones.

Meanwhile, when a composite head having inductive (ID) and magnetoresistive (MR) elements is used to record and reproduce information in and from the data zone, a contact between the MR element and one of the projections on the disk in a reproduction mode causes generation of a thermal asperity, which may undesirably result in the fact that a signal cannot be modulated.

The 'thermal asperity' as used herein refers to a phenomenon in which a contact of an MR element part with one of projections on the disk causes a contacted portion of the MR element part to be heated so that the resistive value of the MR element momentarily rises. The MR element is on an operational principle of converting a variation in the resistive value caused by a magnetic field into an electric signal, so that, even when a change in the resistive value of the MR element caused by the above heat, it is similarly converted into an electric signal. For this reason, a spike-shaped noise signal resulting from a contact of one of the projection on the disk surface therewith is superimposed on a reproduction signal, thus disabling accurate modulation of a signal. Therefore, in the case of such conventional surface features, when it is desired to record data into the data zone, it has been impossible to record device information necessary for the magnetic disk unit such as servo, sector and cylinder in the magnetic disk unit.

It is therefore an object of the present invention to provide a magnetic disk which is divided into CSS and data zones, which can secure a head flying stability of a magnetic head flying over the CSS zone, can avoid head adhesion in the CSS zone and can improve a CSS characteristic, and also to provide a technique for fabricating the magnetic disk.

Another object of the present invention is to provide a magnetic disk which is divided into CSS and data zones, which can avoid head adhesion to any of projections formed in the CSS zone, can improve a CSS characteristic, can make a head-disk gap (head flyability) very small in the data zone, and can realize smooth seeking motion of a magnetic head between the CSS and data zones, and also to provide a technique for fabricating the magnetic disk.

A further object of the present invention is to provide a magnetic disk unit which comprises a magnetic disk as a recording medium having CSS and data zones divided thereon and having surface features accurately controlled, and which can realize a high recording density of the data zone obtained by a secured head flying stability at a low flying height of a magnetic head and can secure reliable operation based on avoidance of head adhesion in the CSS zone and on improvement of a CSS characteristic.

In accordance with an aspect of the present invention, there is provided a magnetic disk unit for use with magnetic disks having a head-disk gap of 0.1µm or less and a high recording density by taking the start operation of the magnetic disk unit into consideration, wherein the magnetic disk is divided into a CSS function zone for which stable sliding between the magnetic head and disk is required and a data zone over which the magnetic head for information reading/writing is required to fly at a low flying height, the CSS zone is formed thereon with surface configuration or features which allow avoidance of head adhesion and satisfaction of a CSS characteristic in the CSS zone, the data zone is formed thereon with surface features which allow insurance of a head flying stability in a low flying state and stabilization of input/output of read/write signals, and the surface features of the respective zones act to improve a head flying characteristic during seeking operation of the magnetic head between the both zones.

That is, in the present embodiment, a plurality of sorts of projections mutually isolated and having such heights as to avoid the head adhesion and satisfy the CSS characteristic are formed as mixed in the CSS zone; a part of a load curve obtained from a cross-sectional curve on a surface of the magnetic disk indicative of a contact condition with the magnetic head, which is located between a top of the cross-sectional curve and a height of 5nm therefrom, has a load ratio BR5 of 0.1-10%; and a plurality of projections shorter than those in the CSS zone and having such a density and size as to suitable for a head flying characteristic are formed in the data zone. In order to secure the stability of the head flying characteristic during the seeking operation of the magnetic head, further, the projection features of the zones on the magnetic disk are controlled so that, with respect to respective average planes of the projections of the CSS zone as viewed from the magnetic head determined by the surface features of the respective zones of the magnetic disk, the average plane of the projections of the CSS zone is higher than the average plane of the data zone and a difference between the average planes is 10nm or less and desirably 5nm or less.

### BRIEF DESCRIPTION OF THE DRAWINGS

Fig. 1A shows a plan view of an example of a magnetic disk in accordance with an embodiment of the present invention;
Fig. 1B is a cross-sectional view of the magnetic disk of Fig. 1A;
Fig. 2 is a cross-sectional view, as magnified, of a part of the magnetic disk of the embodiment of the present invention;
Fig. 3 is a flowchart explaining an example of a method for fabricating the magnetic disk of the embodiment of the present invention;
Figs. 4 and 5 collectively show sequential steps, in sectional view, of a method for fabricating the magnetic disk in accordance with an embodiment of the present invention;
Fig. 6 schematically shows an example of a coater for coating fluorine plastic particles used in the method for fabricating the magnetic disk of the embodiment of the present invention;
Fig. 7 schematically shows an example of surface features of the magnetic disk of the embodiment of the present invention, with its treatment processes;
Fig. 8 is a graph showing an exemplary relationship between etching time and projection height in the method for fabricating the magnetic disk of the embodiment of the present invention;
Fig. 9 is a graph showing an exemplary relationship between size of the fluorine plastic particles and projection size in the method for fabricating the magnetic disk of the embodiment of the present invention;
Fig. 10 is a graph showing an exemplary relationship between the number of times of injecting the fluorine plastic particles and projection density in the method for fabricating the magnetic disk of the embodiment of the present invention;
Fig. 11 is a perspective view, as partly broken away, of a magnetic disk unit in accordance with an embodiment of the present invention;
Fig. 12 is a characteristic diagram showing exemplary relationships between the projection height and CSS and head-disk gap characteristics of the magnetic disk of the embodiment of the present invention;
Fig. 13 is a characteristic diagram showing exemplary relationships between the projection size and CSS tangential force and output signal noise of the magnetic disk of the embodiment of the present invention;
Fig. 14 is a graph showing an exemplary relationship between the projection density and CSS tangential force of the magnetic disk of the embodiment of the present invention;
Fig. 15 is a characteristic diagram showing exemplary relationships between the CSS tangential forces and load ratio BR5 indicative of surface features of the magnetic disk of the embodiment of the present invention;
Fig. 16 is a perspective view of an example of a magnetic head used in the magnetic disk unit of the embodiment of the present invention;
Fig. 17 is a cross-sectional view of projections on the embodiment of the present invention showing different average projection levels in CSS and data zones;
Fig. 18 schematically shows an exemplary surface roughness curve of the magnetic disk of the embodiment of the present invention;
Fig. 19 conceptionally shows an example of a method for calculating an average surface level from the surface roughness curve;
Fig. 20 shows an example, in a model form, of a sectional features of the CSS and data zones on the magnetic disk of the embodiment of the present invention;
Fig. 21 is a graph showing an exemplary relationship between a projection area ratio and flying reference surface height in the method for fabricating the magnetic disk of the embodiment of the present invention;
Fig. 22 is a diagram for explaining an example of projection distribution density in the CSS zone of the magnetic disk of the embodiment of the present invention;
Fig. 23 is a diagram for explaining an example of load curve in the CSS zone of the magnetic disk of the embodiment of the present invention;
Fig. 24 shows another example, in a model form, of sectional features of the CSS and data zones on the magnetic disk of the embodiment of the present invention;
Fig. 25 is a diagram for explaining another example of the load curve in the CSS zone of the magnetic disk of the embodiment of the present invention; and
Figs. 26A and 26B show examples of a load curve obtained from surface features of a CSS zone of a prior art magnetic disk.

### DESCRIPTION OF THE PREFERRED EMBODIMENTS

Embodiments of the present invention will be detailed with reference to the accompanying drawings.

### (Embodiment 1)

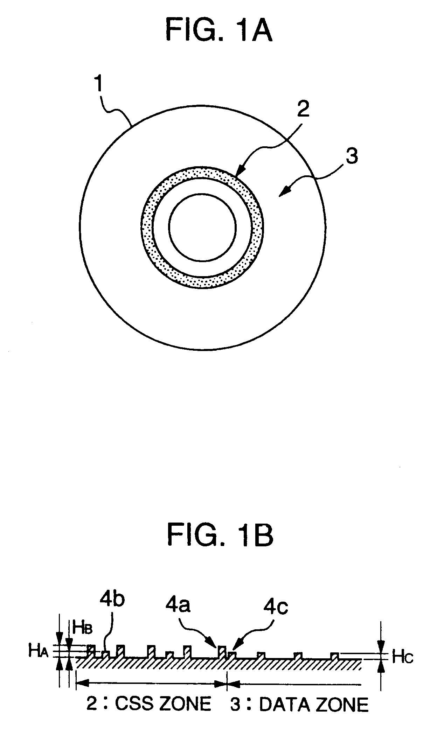

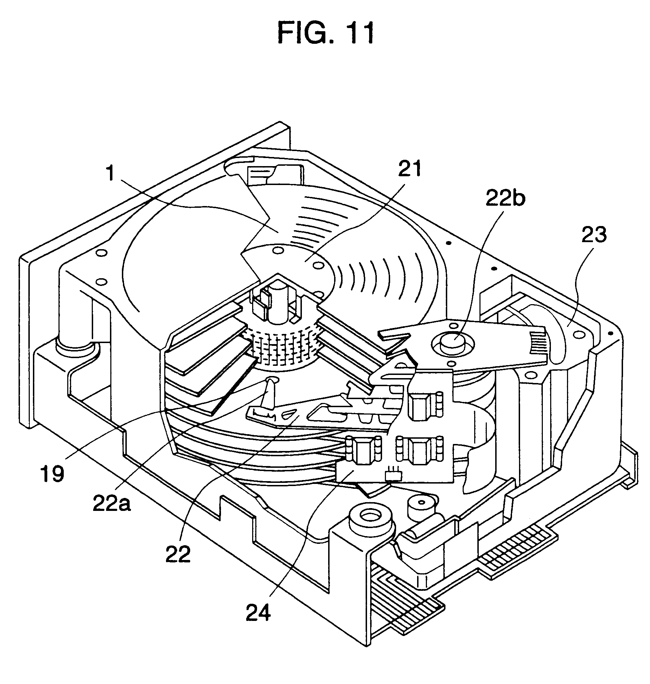

Figs. 1A and 1B are plan and cross-sectional views of an example of a magnetic disk in accordance with an embodiment of the present invention respectively, and Fig. 2 is a partly magnified cross-sectional view of a part of the magnetic disk. Fig. 11 is a perspective view, as partly broken away, of a part of a magnetic disk unit in accordance with an embodiment of the present invention.

As shown in Fig. 11, the magnetic disk unit of the present embodiment comprises a plurality of magnetic disks 1, a spindle 21 for rotatably driving and supporting these magnetic disks in coaxial and parallel relation therebetween, a plurality of head arms 22 to be angularly rotated around a pivot shaft 22b, a voice coil motor 23 for rockingly driving the head arms 22 to position associated magnetic heads 19 with respect to a radial direction of the magnetic disk 1, and a control board 24 having thereon a controller for performing general control over these elements.

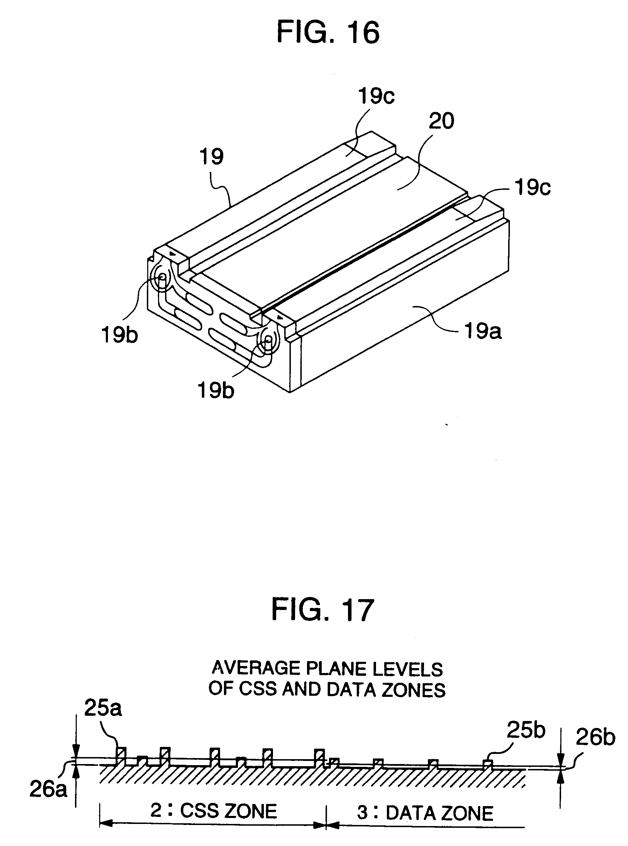

Shown in Fig. 16 is a perspective view of the magnetic head 19 of the present embodiment, which includes a core slider 19a and transducers 19b disposed at one end of a sliding surface 20 of the core slider 19a opposed to the magnetic disk 1 for electromagnetically converting a digital signal to thereby perform recording and reproducing operations of information over the magnetic disk 1. Formed on the sliding surface 20 are slide rails 19c for causing air stream on the surface of the magnetic disk 1 generated by the rotating disk to produce a flying force to the magnetic head.

The flying force generated by the slide rails 19c of the core slider 19a is set at such a value that the entire magnetic head 19 floats with a very small height or gap relative to the surface of the magnetic disk 1 against the pressing force of an associated plate spring 22a, so that, when the magnetic disk 1 is stopped, the magnetic head 19 comes into close contact with the surface of the magnetic disk 1.

That is, in the present embodiment, the magnetic head 19 carries out the CSS operation at the time of starting and stopping the magnetic disk unit, while the magnetic disk 1 is divided into a CSS zone 2 (first zone) for which the CSS operation is carried out and a data zone 3 (second zone) for which ordinary data are recorded and reproduced as shown in Figs. 1A and 1B.

Explanation will then be made as to a method of forming novel surface features on the CSS and data zones 2 and 3 of the magnetic disk 1 of the present embodiment by referring to Figs. 1A, 1B, and 2 to 7.

As shown in Figs. 1A, 1B, and 2, the magnetic disk 1, for example, having an outer diameter of 95 mm and an inner diameter of 25mm has a multi-layer structure of a substrate 10, an Ni-P film 9, an underlying or backing film 8, a magnetic film 7, a protective film 6 and a lubricant film 5 sequentially formed on the substrate 10 in this order. In this case, the Ni-P film 9 is formed by a plating process.

In the present embodiment, more specifically, the CSS zone 2 of the magnetic disk 1 as a ring zone of radii 18mm-21mm is provided thereon with projections 4a each having a height H_{A} of 20nm and a size of 0.4µm and also having a density of 1 x 10⁵ projections/mm² as well as projections 4b each having a height H_{B} of 10nm and a size of 0.4µm and also having a density of 5 x 10⁴ projections/mm². Also formed on the data zone 3 as an outer ring zone of a radius 21mm and longer are projections 4c each having a height of H_{C} of 10nm and a size of 0.5µm and having a density of 5 x 10⁴ projections/mm².

Here is an example of the method for fabricating the magnetic disk 1 of the present embodiment having such a structure as mentioned above. An aluminum alloy substrate 10 having an outer diameter of 95mm and an inner diameter of 25mm and a thickness of 0.8mm is subjected to a plating process with Ni-P to form an Ni-P film 9, subjected to a mirror polishing operation to have a surface roughness Ra of 0.5nm or less, and then subjected to a sputtering process to form a Cr backing film 8, a Co-series magnetic film 7 and a carbon-made or the like-material-made protective film 6 sequentially on the Ni-P film 9 and having thicknesses of 40nm, 50nm and 30nm respectively. Subsequently the resultant laminate is subjected on the protective film 6 to a dry etching process to form fine projections and depressions thereon and then subjected to a coating operation with fluorine-series lubricant to form thereon a lubricant film 5 of, e.g., 5nm thick.

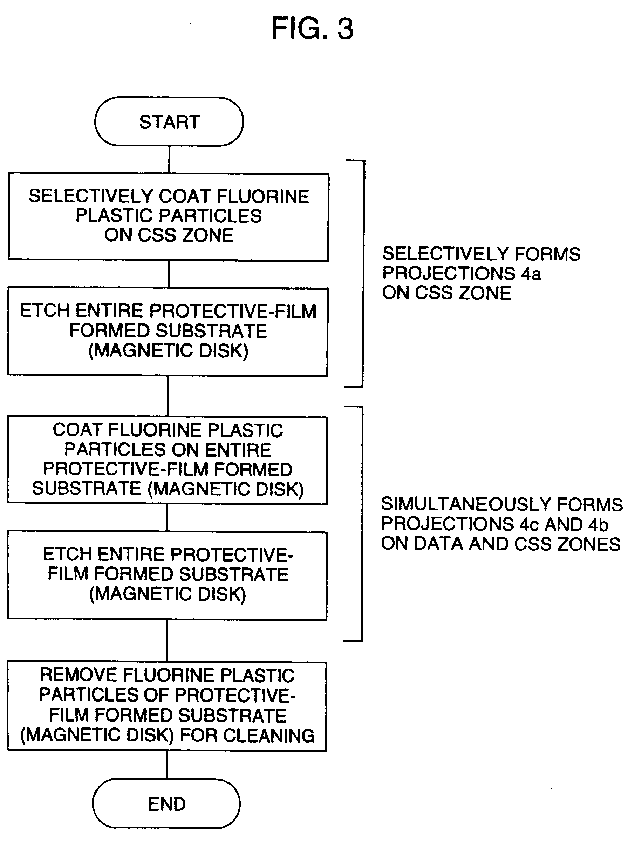

The method for forming the projections 4a to 4c on the surface of the protective film 6 with use of the dry etching process will be detailed by referring to Figs. 3, 4 and 5.

The fabrication method of the present embodiment is shown in Fig. 3 in the form of a flowchart. The CSS zone of the carbon protective film of the magnetic disk made in the form of a thin film is attached thereon with fine particles corresponding in size to projections to be formed and subjected to a dry etching process with use of the fine particles as a mask to remove the protective film by a depth of several nm, the data and CSS zones thereof are attached thereon with fine particles corresponding in size to projections to be formed with a set density, and then subjected to a cleaning operation to remove the fine particles on the respective zones and to form fine projections in the CSS and data zones.

In the present embodiment, the protective film 6 is formed thereon with such projections as mentioned above by a process for forming the projection 4a on the CSS zone 2 and by a process for forming the projections 4b and 4c in the CSS and data zones 2 and 3. In the respective processes, fine fluorine plastic particles 13 are selectively attached on the protective film 6 as a mask and then subjected to an etching process with the fluorine plastic particles 13 as the mask to form the aforementioned projections.

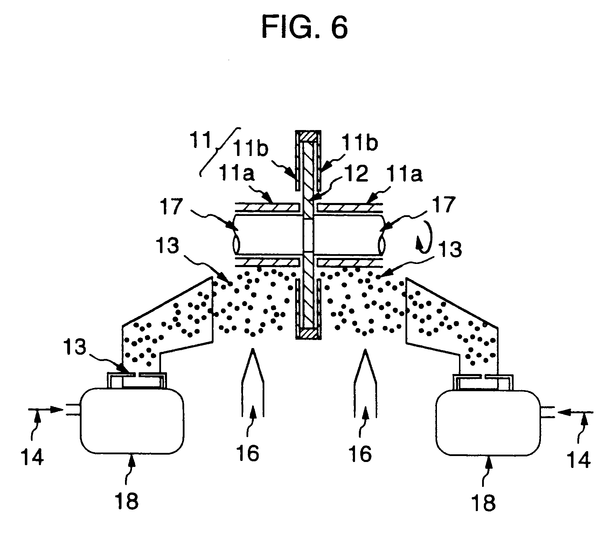

Fig. 6 shows an example of a coater for coating the fluorine plastic particles 13 to be used as a mask. The illustrated coater comprises a rotary shaft 17 (which rotary driver is not illustrated) for holding a protective-film formed substrate 12 on which the fluorine plastic particles 13 are to be coated or attached and for driving the substrate, pairs of mask members 11, 11a and 11b made of, e.g., fluorine plastic material and provided on both sides of the protective-film formed substrate 12 to mask inner sides or data zones 3 of the CSS zones 2 of the protective-film formed substrate 12 on its both sides, a pair of fluorine plastic particle generation baths 18 for dispersing the fluorine plastic particles 13 having a fine particle size and carried on nitrogen gas 14, injection nozzles 15 for intermittently injecting the fluorine plastic particles 13, and application electrodes 16 for applying electric charges onto the fluorine plastic particles 13.

Explanation will next be made below as to an example of the method for coating the fluorine plastic particles 13 on the CSS and data zones 2 and 3 of the thin-film protective film 6 of the protective-film formed substrate 12 with use of the above coater to form fine projections and depressions thereon.

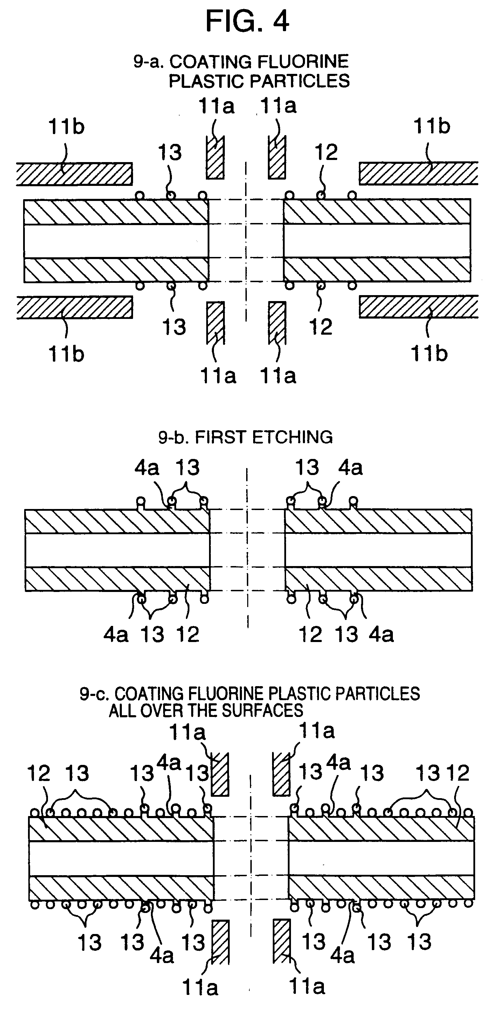

First of all, the protective-film formed substrate 12 is fixed to the rotary shaft 17 so that inner and outer peripheral parts of the disk other than the CSS zone 2 are covered with the mask members 11a and 11b. Meanwhile, the fluorine plastic particles 13 having a particle size of 1µm are dispersed into organic solvent, injected as atomized into streams of the nitrogen gas 14, and then injected from the ejection nozzles 15. The fluorine plastic particles 13 injected from the ejection nozzles 15 together with the nitrogen gas 14 are applied with electric charges by the application electrodes 16 and then coated on the parts of the protective-film formed substrate 12 other than the mask members 11a and 11b, i..e, on the CSS zones 2 (Fig. 4, step 9a).

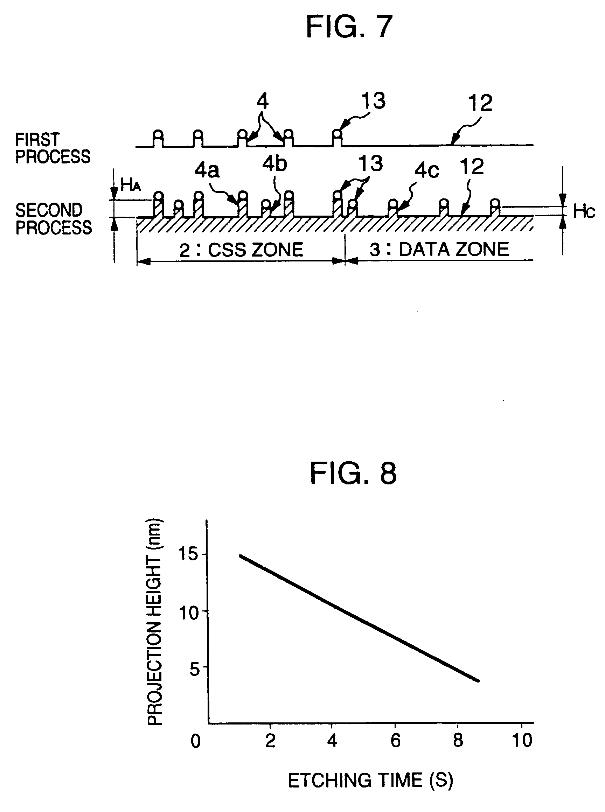

The protective-film formed substrate 12 attached with the fluorine plastic particles 13 is then subjected to a dry etching process with use of an oxygen gas. At this time, parts of the protective film 6 attached with the fluorine plastic particles 13 are not subjected to the etching operation and parts of the protective film 6 other than the attached fluorine plastic particles 13 are etched and removed, so that fine projections and depressions corresponding in position and size to the fluorine plastic particles 13 are formed on the parts of the protective-film formed substrate 12 except the mask members 11a and 11b, i.e., on the CSS zone 2 as shown in Fig. 7 (Fig. 4, step 9b).

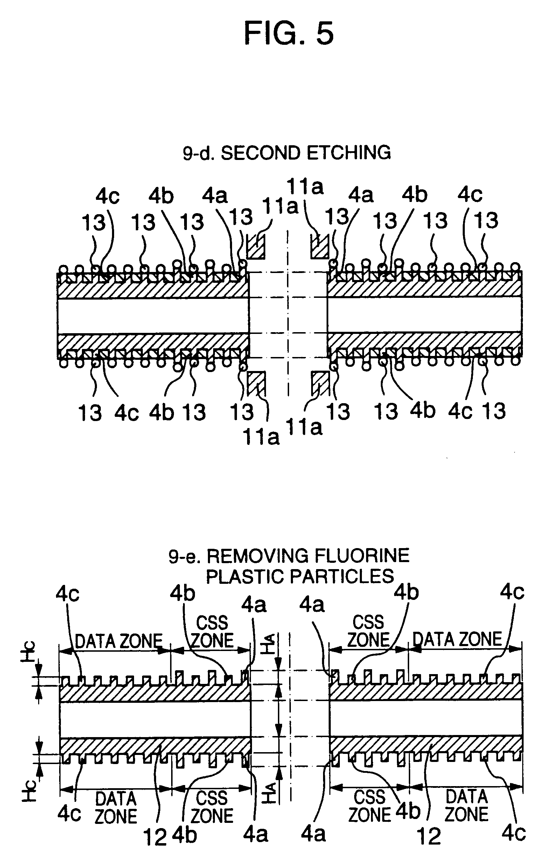

Subsequently, the protective-film formed substrate 12 is again fixedly mounted to the rotary shaft 17 shown in Fig. 6 and only parts of the protective film 6 located at the inner side of the above CSS zones 2 are masked by the mask members 11a to coat the fluorine plastic particles 13 on parts of the protective film 6 not masked by the mask members 11a, i.e., on the CSS and data zones 2 and 3 in the similar manner to the above (Fig. 4, step 9c). Similarly, dry etching is carried out over the protective-film formed substrate 12 with use of the oxygen gas (Fig 5, step 9d). Finally, the fluorine plastic particles 13 coated on the protective film are scrubbed and washed out with use of pure water to remove the fluorine plastic particles 13 from the surfaces of the protective-film formed substrate 12 (Fig. 5, step 9e).

When the process for coating the fluorine plastic particles 13 and the process for performing the dry etching operation are effected respectively twice in this way, such projections and depressions as shown in Fig. 7 can be formed on the thin-film protective film of the protective-film formed substrate 12 in the CSS zone 2 and in the data zone 3 located on its outer side.

More detailed explanation will now be made as to the projections/depressions features formed on the respective zones according to the above processes. Formed on the CSS zone 2 are the projections 4a having a height H_{A} of about 20nm and the projections 4b having a height H_{B} of about 10nm. The projections 4a of 20nm high are formed as remained after the CSS zone 2 of the protective film is first attached thereon with the fluorine plastic particles 13 and then subjected to the two times of the dry etching process; whereas, the projections 4b having a height H_{B} of about 10nm are formed as remained without being etched after the first-etched parts of the CSS zone 2 not attached with the fluorine plastic particles 13 through the first attaching process of the fluorine plastic particles 13 are attached thereon with the fluorine plastic particles 13 through the second particle attaching process and then are subjected to the second drying etching process with the second particles used as the mask.

The projections 4c of the data zone 3 have a height H_{C} of about 10nm. The projections 4c are obtained as remained after the first-etched parts of the data zone 3 not attached with the fluorine plastic particles 13 through the first attaching process of the fluorine plastic particles 13 are attached thereon with the fluorine plastic particles 13 through the second particle attaching process and then are subjected to the second drying etching process with the second particles used as the mask.

The height of the projection can be arbitrarily controlled by changing the dry etching conditions such as the pressure of the oxygen gas for etching of the protective film 6, the power and etching time. Fig. 8 is an exemplary relationship between the etching time and projection height. It will be seen from Fig. 8 that the projection height is inversely proportional to the etching time. In the present embodiment, such etching conditions were set that the projection height (etched depth per one etching process) was 10nm. Further, the size and density of the projections can be arbitrarily controlled accurately by adjusting the size of the fluorine plastic particles 13 and the density of the fluorine plastic particles 13 to be coated on the protective film 6, as will be easily appreciated from the above processes.

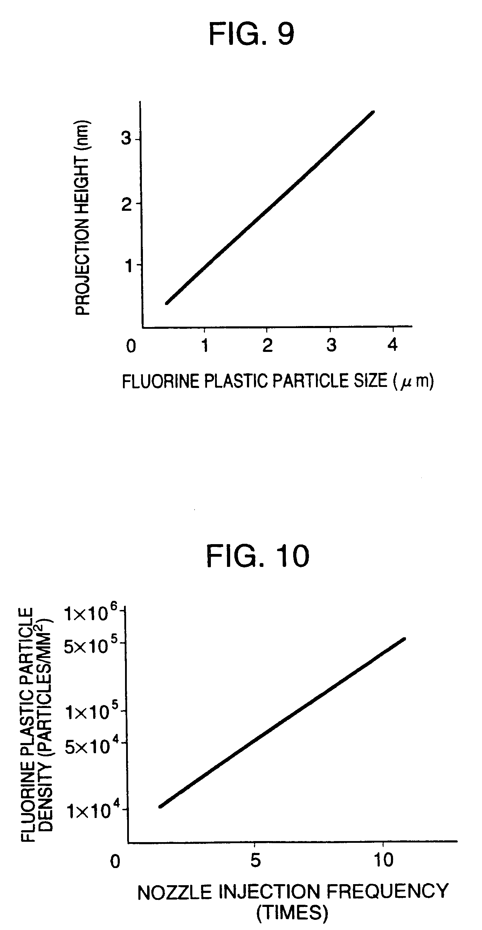

Referring to Fig. 9, there is shown a relationship between the diameter of the fluorine plastic particles 13 and the diameter of projections formed through the etching operation. It will be seen from the drawing that the diameter of the projections becomes somewhat smaller than that of the fluorine plastic particles 13 but substantially close thereto and is proportional to the size of the fluorine plastic particles 13.

Fig. 10 shows a relationship between the injection frequency from the ejection nozzle 15 as one of the coating conditions of the fluorine plastic particles 13 and the density of the fluorine plastic particles 13 attached onto the surface of the protective film 6. The density of the coated fluorine plastic particles 13 is associated with, in addition to the injection frequency from the ejection nozzle 15, the rotational speed of the protective-film formed substrate 12 to be coated, the distance of the substrate from the ejection nozzle 15, the coating time, the material of the mask members 11a and 11b, and so on.

In this way, the projection size and density can be easily controlled accurately by changing the coating conditions of the fluorine plastic particles 13. The coating conditions were set in the present embodiment so that, with respect to the data zone 3, the fluorine plastic particles 13 have a particle size of 0.5µm, the injection frequency from the ejection nozzle 15 is 5, the protective-film formed substrate 12 is rotated at a rotational speed of 5rpm, the distance between the ejection nozzle 15 and protective-film formed substrate 12 is 40mm, the coating time is 10sec., the mask members 11a and 11b are made of fluorine plastic material, with the result that resultant projections have a size of 0.5µm and a density of 5 x 10⁴ projections/mm². Similarly, with respect to the CSS zone 2, the same coating conditions as in the data zone 3 were used except that the injection frequency from the ejection nozzle 15 is 7, with the result that resultant projections have a size of 0.5µm and a density of 1 x 10⁵ projections/mm².

In a load curve obtained from the surface cross-sectional curve of the magnetic disk 1 indicative of the contact condition of the magnetic disk 1 with the magnetic head 19, a load ratio BR5 at 5nm from the top of the cross-sectional curve was between 0.5 and 1.2%. The protective-film formed substrate 12 having the CSS and data zones 2 and 3 formed thereon such projections are coated with lubricant to form the lubricant film 5, thus fabricating the magnetic disk 1

The magnetic disks 1 fabricated in such a manner as mentioned above were built in such a magnetic disk unit as shown in Fig. 11 with use of such a magnetic head 19 as shown in Fig. 16 and then subjected to measurements of head-disk gap, CSS and head adhesion characteristics. The measurement results were very good. More specifically, in the data zone 3 for reading and writing of information, the flying gap between the magnetic disk 1 and the magnetic head 19 flying over the disk was stably 80nm and a high recording density was attained. In the CSS zone 2 where the magnetic head 19 is rested stationarily thereon at the time of stopping the magnetic disk unit, no head adhesion took place, the CSS tangential force in the CSS mode was below 40mN with a very small sliding resistance, and the CSs frequency was over 105.

With regard to the CSS and data zones 2 and 3 of the magnetic disk 1, the head flying stability will be explained when the magnetic head 19 performs its seeking operation.

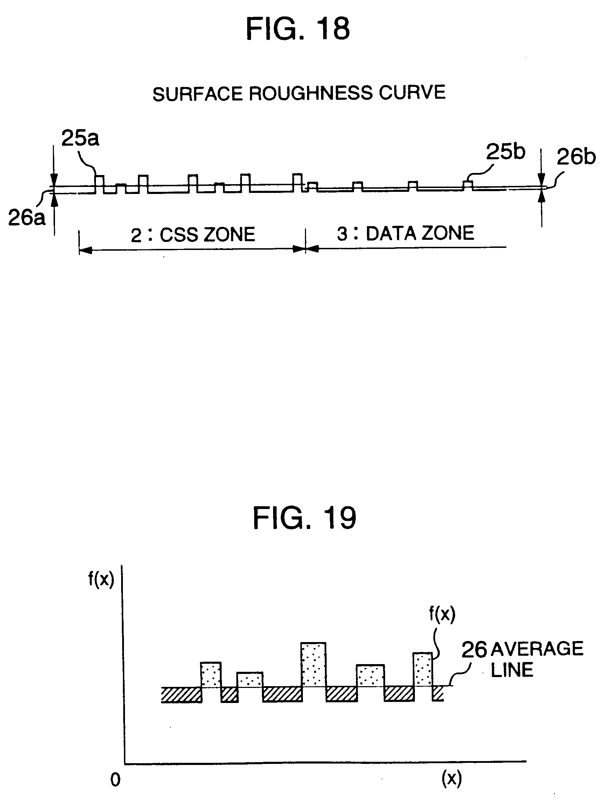

The CSS and data zones 2 and 3 of the protective-film formed substrate 12 were applied thereon with the fluorine plastic particles 13 as masks with use of different sizes of the fluorine plastic particles 13 and with different coating densities, and then were subjected to the dry etching process to form various sorts of fine projections on the respective zones. In this connection, when the projected surface is expressed in terms of a surface roughness curve f(x) as shown in Fig. 19, an average line 26 on these projected surfaces is determined so that upper and lower parts (dotted and hatched areas in the drawing respectively) surrounded by the average line 26 and the surface roughness curve f(x) become equal to each other. Accordingly, when surface roughness curves 25a and 25b in Fig. 18 are calculated from the surface features of Fig. 17 indicative of projections in the CSS and data zones 2 and 3 in the present embodiment, since the CSS and data zones 2 and 3 have different heights of projections, there takes place a step difference between an average line 26a in the CSS zone 2 and an average line 26b in the data zone 3. The step difference varies with the height, size and density of such projections. As shown in Table 1 below, various sorts of projections were formed on the CSS and data zones 2 and 3, associated step differences were measured and head flying stabilities when the magnetic head 19 performed its seeking operation were examined.

**Table 1**

| | Surface Projection Feature | CSS Zone | Data Zone | Step Difference (nm) | Flying Stability |
|---|---|---|---|---|---|
| Test 1 | Projection Height (nm) | 20 | 10 | 5 | ○ |
| Test 2 | Projection Size (µm) | 1 | 1 | 10 | ○ |
| Test 3 | Projection Height (nm) | 30 | 5 | 15 | X |
| Test 4 | Projection Size (µm) | 10 | 0.3 | 24 | X |
| Test 5 | Projection Size (µm) | 0.5 | 0.3 | 3 | ○ |
| Test 6 | Projection Density (projections/mm²) | 5×10⁵ | 2×10⁴ | 13 | △ |
| Test 7 | Projection Density (projections/mm²) | 1×10⁴ | 5×10⁴ | 30 | X |

It has been turned out from the test results that, when the step difference between the CSS and data zones 2 and 3 in the average line is within 10nm (desirably within 5nm), the magnetic head 19 has a good flying stability.

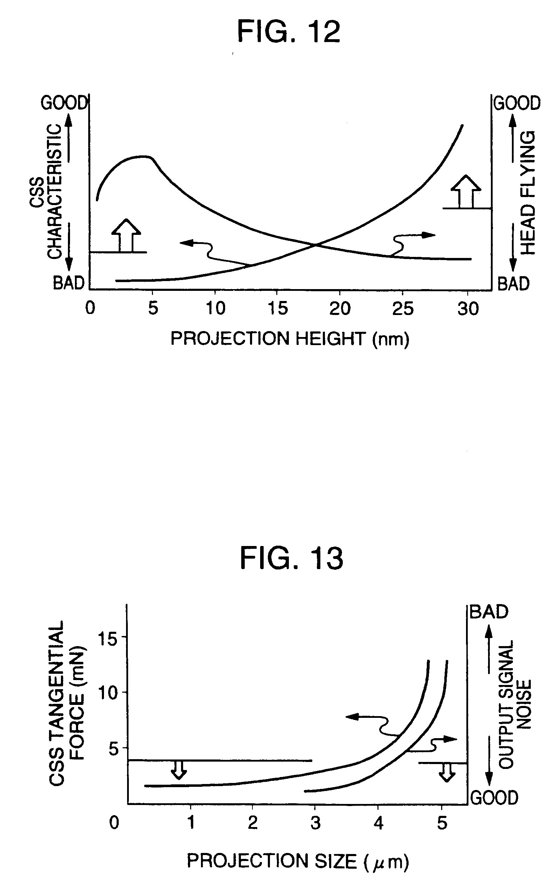

The heights of projections formed on the protective-film formed substrate 12 were adjusted by controlling the dry etching time so that the step difference between the CSS and data zones 2 and 3 becomes within 10nm, whereby magnetic disks 1 having projections of 0-30nm high were fabricated. The magnetic disk unit having the magnetic disks 1 built therein was examined with respect to the CSS and head-disk gap characteristics. In this case, the projections were assumed to have a height of 0.5µm and a density of 5 x 10⁴ projections/mm², and the load ratio BR5 at 5nm from the top of the cross-sectional curve indicative of the contact condition of the projections with the magnetic head 19 was to be between 0.5 and 1.2%. It will be observed from Fig. 12 that, as the projection height increases, the CSS characteristic is improved and on the contrary, the head-disk gap characteristic is deteriorated. Further, as the projection height decreases, the CSS characteristic becomes bad, whereas the head-disk gap characteristic is improved in a range of the projection heights of 0.5nm-30nm and is deteriorated in a range of the projection heights of below 0.5nm. In this connection, the demanded CSS and head-disk gap characteristics vary with device performances which include the memory capacity and access time (time taken from a demand of a desired signal to completion of reading thereof) of the magnetic disk unit, the desired CSS frequency, the torque and rotational speed of the spindle 21 (motor) for rotatably driving the magnetic disk 1.

Given below as an example is a Table showing relationships between the CSS and head-disk gap characteristics and the projection height demanded by the present magnetic disk unit.

**Table 2**

| Projection Height (nm) | 0 | 5 | 10 | 15 | 20 | 25 | 30 |
|---|---|---|---|---|---|---|---|
| CSS Characteristic | X | X | X | △ | ○ | ○ | ○ |
| Head Flying Characteristic | X | ○ | ○ | △ | X | X | X |

There was not such projection height that satisfies both of the CSS and head-disk gap characteristics, the projection height to attain desired CSS characteristics was 20nm or more, and the projection height to attain desired head-disk gap characteristics was between 5nm and 10nm.

Next, with respect to the size of projections to be formed on the protective-film formed substrate 12, the size of the fluorine plastic particles 13 to be coated on the substrate was changed to prepare magnetic disks 1 having projections of 0.5µm-5µm in size formed through the dry etching process, and the magnetic disk unit having such magnetic disks 1 built therein was examined with respect to the CSS characteristic. In this case, the projections were set to have a height of 20nm and a density of 5 x 10⁴ projections/mm². As shown in Fig. 13, as the projection size increases, the CSS tangential force is increased and fluctuations therein become great. As the projection size increases, the noise of an output signal caused by the magnetic head 19 for reading and writing of information is increased, sometimes leading to an signal error. Based on the CSS and electrical characteristics demanded by the present magnetic disk unit, the projection size was below 4µm. Further based on the electric signal including noise in the output signal, projection size was desirably below 1µm.

For the purpose of grasping the influences of the density of the projections formed on the protective-film formed substrate 12, the attachment density of the fluorine plastic particles 13 having a particle size of 1µm to be coated on the protective-film formed substrate 12 to change the density of projections formed through the dry etching process to have a projection density of from 2 x 10⁴ projections/mm² to 2 x 10⁶ projections/mm². The magnetic disk unit having magnetic disks 1 thus fabricated was examined with respect to the CSS characteristic. In this case, the projection height was 20nm and the projection size was 1µm.

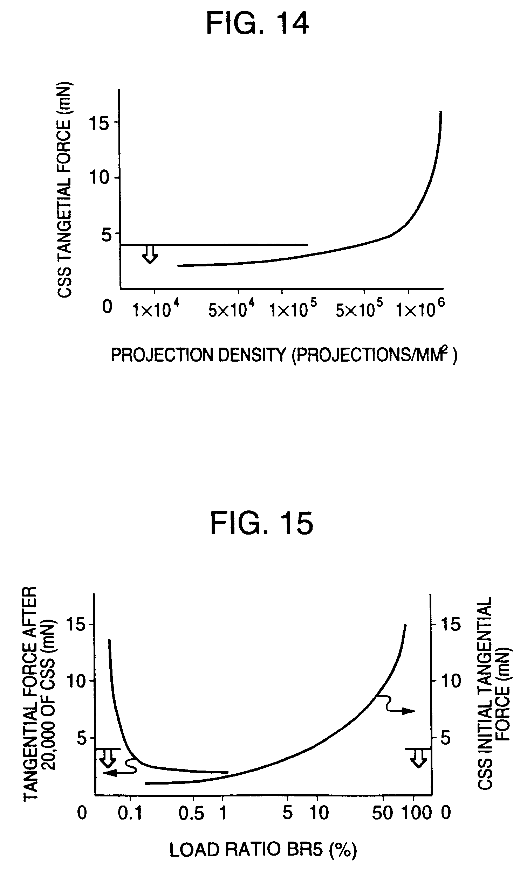

As shown in Fig. 14, as the projection density decreases, the CSS tangential force is decreased. Further, when the projection density becomes remarkably small until there is no sliding surface of the magnetic head 19 with any projections, the CSS tangential force becomes remarkable in fluctuation to deteriorate the CSS characteristic. To avoid this, it is necessary that at least one of the projections be always present within the range of the sliding surface 20 of the magnetic head 19. When the projection density becomes too high, on the other hand, the head adhesion force becomes large, which disadvantageously results in that, at the time of starting the magnetic disk 1, the magnetic disk 1 becomes impossible to rotate or the magnetic head 19 is damaged. This results from the contact condition of projections with the sliding surface 20 of the magnetic head 19, which is associated with the projection size and density. That is, is necessary to evaluate the load ratio BR5 indicative of the surface features of the magnetic disk 1 showing the contact condition with the magnetic head 19 as well as the projection size and density. The load ratio BR5 is obtained from the load curve indicative of surface features on the magnetic disk 1 and indicates a ratio of a cut plane at 5nm from the top of the projections with respect to the reference plane.

The load ratio BR5 was used to examine the CSS characteristic. It will be seen from Fig. 15 that as the load ratio BR5 decreases the initial CSS tangential force is decreased. That is, this is because the contact area with the sliding surface 20 of the magnetic head 19 becomes small and the resistive force during the sliding operation with the magnetic head 19 is decreased. Meanwhile when the contact area with the sliding surface 20 of the magnetic head 19 is small, the surface pressure by the head load becomes large and the friction of the projections on the magnetic disk 1 becomes significant. Accordingly, when the load ratio BR5 becomes extremely small, the CSS tangential force increases after 20,00 times of CSS operations as shown in Fig. 15, thus involving such a problem that head crash takes place during operation of he magnetic disk unit.

From the above results, the projection features on the magnetic disk 1 were different in the CSS and data zones 2 and 3, the projections in the CSS zone 2 where the magnetic head 19 performs its CSS operation had a height of 15nm or more (desirably, 20nm or more), a size of 4µm or less and a density of from 2 x 10⁴ projections/mm² to 5 x 10⁵ projections/mm², and the load ratio BR5 was between 01. and 10%. The projections in the data zone 3 where it is required that the flying gap of the magnetic head 19 be small and the flying characteristic be stable, had a height of 5-15nm (desirably, 5-10nm), a size of 4µm or less and a density of from 2 x 10⁴ projections/mm² to 5 x 10⁵ projections/mm², and the load ratio BR5 was smaller than that in the CSS zone.

In this way, with the magnetic disk 1 having the surface features in accordance with the present embodiment, the mutually isolated, the relatively high projections 4a accurately controlled with respect to their height, size and distribution density are formed on the CSS zone 2 to realize prevention in the head adhesion and improvement in the CSS characteristic; whereas, the relatively low projections 4c are formed in the data zone 3 to realize increase in the data recording density caused by the stable, very-small flying gap of the magnetic head 19 over the data zone 3. Further, in the CSS zone 2, the higher projections 4a are present as mixed with the projections 4b randomly formed, so that the average height of the projections in the CSS zone 2 becomes higher than that in the data zone 3, which results in that the magnetic head 19 performing its seeking operation from the data zone 3 to the CSS zone 2 can be avoided from coming into contact with the projections 4a to realize its smooth seeking operation, and the magnetic head 19 can reliably have a stable flying characteristic in the CSS zone 2.

This means that the magnetic head 19 using such MR element that tends to be easily adversely influenced by the contact with the surface of the magnetic disk 1 due to, e.g., thermal asperities, can perform accurate information recording and reproducing operations over the CSS zone 2, and thus the CSS zone 2 can be effectively used, e.g., for recording management information such as specifications of the magnetic disk unit.

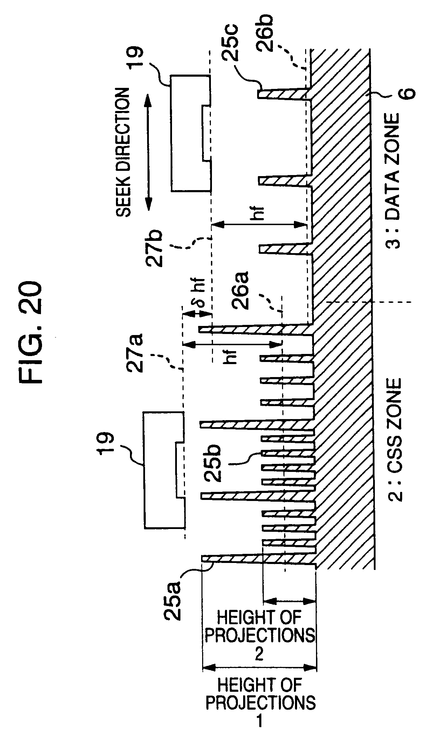

Fig. 20 shows a cross-sectional view, in a model form, of a surface configuration of a magnetic disk fabricated by the method for providing the CSS zone on the inner peripheral side of the magnetic disk and the CSS zone for data recording and reproduction with different surface configurations according to the present invention, and also shows a head flying height hf. More in detail, two sorts of heights of projections A and B are randomly present as mixed in the CSS zone. Present randomly on the data zone are a single sort of height of projections C. The size, height and density of the projections C are optimumly set so that the magnetic disk can fly at a very low height over the data zone. The taller projections A in the CSS zone is set to have an optimum height, density and size to thereby avoid the magnetic head adhesion and reduce the tangential force in the CSS mode. The shorter projections B in the CSS zone, on the other hand, are set to provide an optimum average height, density and size to thereby increase the head flying reference plane.

When the height of the projections C in the data zone is set to have the same height as that of the shorter projections B in the CSS zone, the both projections can preferably be formed at the same time through the identical etching process, but the both projections may be made different in height as necessary. The flying reference plane height in the CSS zone is set through control of the height and density of the projections B to be higher than that in the data zone by a height belonging to a range of below 10nm.

In the magnetic disk unit of the present invention, the head flying height hf can be designed to be higher than the height of the projections C in the data zone and to be lower than the height of the projections A in the CSS zone, thus securing a flying reliability in the data zone and also a high recording density.

The projections formed on the CSS zone and having a size of several µm, a density of several tens of hundreds of projections/mm² and a load ratio BR5 of 0.1-10% enable avoidance of the head adhesion in the CSS zone, insurance of the CSS frequency (usually 20,000), and also suppression of any increase in the tangential force when the head is sledded on the disk in the CSS mode. Further, the projections are formed on the data zone to have such a size and density that causes the projection to be shorter than that in the CSS zone, the load ratio BR5 to be smaller than that in the CSS zone and the average plane to be lower than that in the CSS zone, whereby the flying gap of the magnetic head can be 0.1µm or less, the head flying characteristic can be remarkably improved, and the head flying stability can be remarkably improved during the seeking operation between the CSS and data zones.

Since two or more sorts of projections having different heights are formed as mixed on the CSS zone, the projections A for the purpose of avoiding the adsorption of the magnetic head and reducing the tangential force can be controlled separately from the projections B for the purpose of determining the average height of the CSS zone. That is, for the purpose of avoiding adsorption of the magnetic head and reducing the tangential force in the CSS mode, the height, density and size of the projections A can be optimized. Further, the projections B other than the projections A playing a role of avoiding the head adsorption contribute to increasing the average line 26a and acts to lift the flying plane.

It is preferable that two or more sorts of projections having different heights be randomly arranged as mixed. This is because the presence of the projections arranged on the rotating disk in a specific pattern may possibly cause the head flying over the disk to be resonated.

As exemplified in Fig. 20, in accordance with the present invention, the flying height of the head over the data zone is lower than that of the projections A 25a over the CSS zone. In general, the head flying over the disk at a height lower than the height of the projections of the CSS zone, when seeking and invading into the CSS zone, may be brought into strong contact with the taller projections A provided to avoid the CSS zone adhesion, thus deteriorating the head flying stability and sometimes leading to a sliding accident. In the magnetic disk of the present invention, however, the presence of the projections B 25b causes a flying plane 27a of the CSS zone to be higher by σhf than a flying plane 27b of the data zone, so that the projections B act to avoid the head from being brought continuously into strong contact with the projections A of the CSS zone. In Fig. 20, projections C are designated by 25c, an average height of the CSS zone is designated by 26a, and an average height of the data zone is designated by 26b.

### (Embodiment 2)

It has been confirmed how the flying reference plane varies when the area ratio of the projections formed on the CSS zone 2 is changed. In this test, the projection height was 10nm, the projection size was about 2µm, and the projection density was changed within a range of about from 2 x 10³ projections/mm² to 3 x 10⁵ projections/mm² to change the area ratio.

The word 'flying reference plane' as used herein refers to a reference plane indicative of a head flying height and which becomes the flying reference plane when the substrate has an ideal planar surface. When the substrate surface is rough, an average plane or average plane height of the rough surface becomes the flying reference plane. The word 'projection area ratio' as used herein refers to a ratio of a total areas of projections present to unit area of the magnetic disk 1. The average plane height from the bottom of the projections on the magnetic disk 1 is expressed in terms of a product of the projection height and projection area ratio. This time, since the projection height was set to be 10nm, the average plane height must increase proportionally to the projection area ratio and correspondingly the flying reference plane also must increase at a rate of 10nm per 100%.

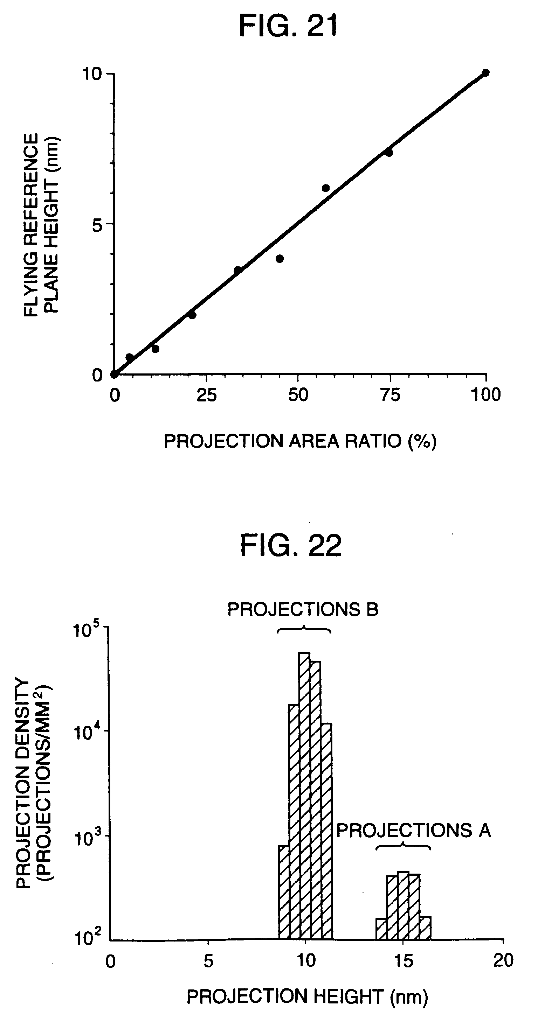

The above test results are given in Fig. 21. It will be observed from the drawing that as the projection area ratio increases the flying reference plane (average plane height) is increased substantially linearly.

When optimum projections are applied to the CSS zone 2 based on the results, it became possible to rise the flying reference plane thus to secure stable flying even in the CSS mode. The fabricating process will be first explained below. The process was basically the same as the method used in Figs. 4, 5 and 6 exemplified in the embodiment 1.

The magnetic disk 1 having the protective-film formed substrate 12, the magnetic film 7 and carbon protective film 6 sequentially laminated on the protective-film formed substrate 12 is covered with the mask members 11a and 11b so that only the CSS zone 2 can open to the outside in the inner peripheral side of the substrate, and then only the open CSS zone 2 is coated with the fluorine plastic particles 13 to have a predetermined particle density. Thereafter, the resultant substrate is subjected to a dry etching process to remove the protective film 6 covering the entire surface of the magnetic disk 1 by a predetermined amount, thus forming the first projections A (25a) acting to reduce the CSS tangential force and avoid the head adhesion.

The substrate having the fluorine plastic particles 13 still attached thereon is again covered with the mask members 11a and 11b so that only the CSS zone 2 of the magnetic disk 1 can open to the outside, and then only the CSS zone 2 is coated with the fluorine plastic particles 13 to have a predetermined area ratio. For example, the coating was carried out for a prolonged coating time to have an area ratio of about 45%.

Further, the mask members 11a and 11b acting to provide selective exposure of the CSS zone 2 are removed and the magnetic disk 1 is coated on its entire surface with the fluorine plastic particles 13 as a mask. In this case, the coating is carried out to have such a density that the flying reference plane of the data zone 3 will not be raised.

The resultant magnetic disk 1 is again subjected to the dry etching process with use of the oxygen gas to form the second projections B (25b) and projections C (25c). Thereafter, the disk is subjected to a scrubbing and washing process to remove the fluorine plastic particles 13 remaining thereon, thus completing a magnetic disk 1 having the CSS zone of such a sectional view as shown in Fig. 20 on the carbon protective film.

Through the above steps of the process, there can relatively easily fabricated a magnetic disk 1 in which the CSS zone 2 has desired projection features. With regard to the projection density distribution of the CSS zone 2 of the magnetic disk 1, the projections A and B are distributed to have clearly separated sizes of about 15 and 10nm as shown in Fig. 22. And the projections A have a density of about 1.5 x 10³ projections/mm² and the projections B have a density of about 1.5 x 10⁵ projections/mm².

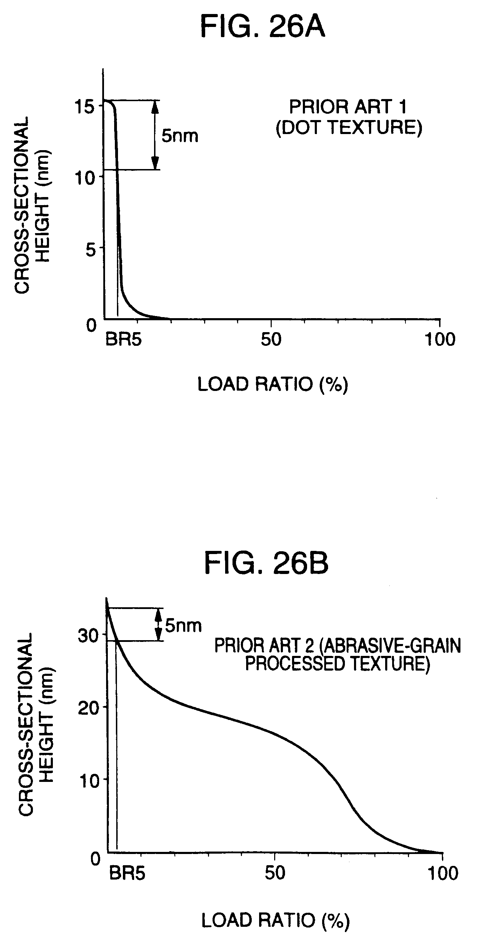

Two sorts of load curves of a CSS zone in a prior art magnetic disk are given for your reference. Fig. 26A is a load curve characteristic of the surface configuration of a magnetic disk comprising a glass substrate having dot-like projections of about 15nm high formed thereon, a recording magnetic film and protective film sequentially formed on the substrate. Since the surface configuration is made by printing projections (dots) of substantially the same shape and height on the substrate, its load curve draws a single curve within a load ratio range of from 0 to about 5%. The dots act as projections playing a role of avoiding the head adhesion and reducing the CSS tangential force. However, the dots fail to have a function of rising the flying reference plane.

Meanwhile, Fig. 26B is a load curve characteristic of the CSS-zone surface configuration of a magnetic disk comprising an NiP plated substrate having a CSS zone subjected to a circumferentially fine groove processing, a recording magnetic film and protective film sequentially formed on the substrate. However, with regard to the fine groove processing with use of abrasive grains, it is difficult to control a load ratio BR5 in the load curve and an average plane height independently of each other.

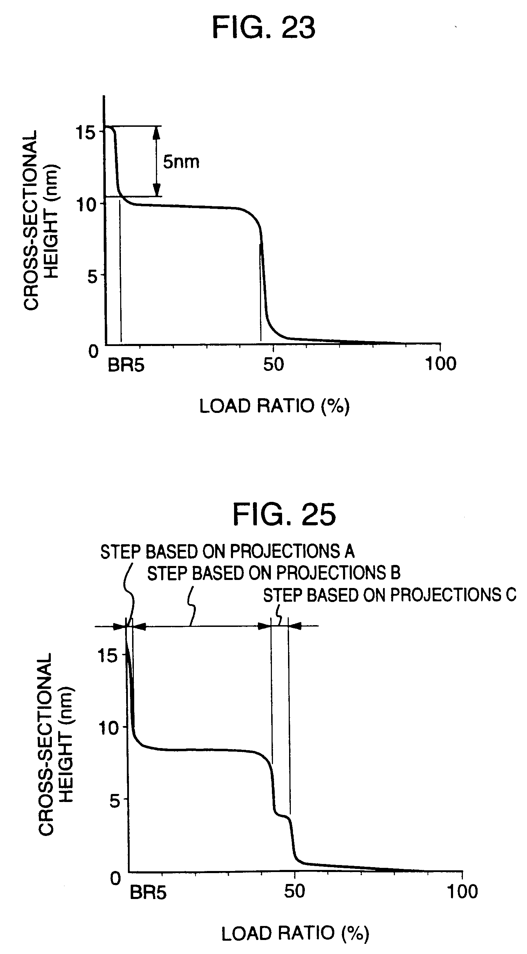

Shown in Fig. 23 is a load curve of the CSS zone 2 provided on the inner peripheral side of the magnetic disk 1 according to the present embodiment. Since the projections A acting to avoid the head adhesion and reduce the CSS tangential force are randomly present as mixed with the projections B acting to rise the flying reference plane in the CSS zone 2, the illustrated load curve is characterized by drawing a two-step curve. The first step of the curve, that is, the curve within a load ratio range of from 0 to about 4% results from the projections A which play a role of avoiding the head adhesion in the CSS zone 2 and reducing the CSS tangential force. The second step of the curve, i.e., the curve within a load ratio range of from about 4% up to about 45%, on the other hand, results from the projections B and draws a substantially flat line. This curve part is characterized by the projections B playing a role of rising the flying reference plane of the magnetic head 19.

Assume now in the present embodiment that the area ratio in the CSS zone 2 is 45%. Then the flying reference plane rises about 4nm-5nm, as will be clear from Fig. 21. For this reason, in the case where the head flying height hf is 20nm, even if the height of the projections A is 20nm, no continuous contact will take place between the magnetic head 19 and projections A in the CSS zone 2. Further, the projections A, which density and area ratio are by an order of magnitude lower than those of the projections B, will not substantially contribute to the flying reference plane. The height of the projections B is set to be 10nm in the present embodiment. So if the projections B have different heights, then a relationship between the projection area ratio and flying reference plane height must be newly found. In this way, the load curve of the present invention, in which the projections having different heights and densities are distributed as mixed in the CSS zone 2, is clearly different from the load curve obtained from the surface configuration of the CSS zone of the prior art magnetic disk of Figs. 26A and 26B.

However, even with the magnetic disk 1 of the present invention having the CSS zone 2, the sectional shape must be optimumly set. For example, when the area ratio of the projections A is in a range of 0.1-10%, the CSS tangential force can be suppressed to a low level, while, a difference of the area ratio of the projections A from that of the projections B is smaller than 5nm, the CSS zone rises even within the above range. Accordingly, the height difference between the projections A and B is desirably 5nm or more. When the area ratio of the projections B is about 10%, the projections B less acts to rise the flying reference plane of the magnetic head 19; whereas, when the area ratio is set to be higher than 70%, the flying reference plane of the magnetic head 19 can be raised but the CSS tangential force is also increased.

As has been mentioned above, the height, density and area ratio of the projections A as well as the height, density and area ratio of the projections B can be set in their wide ranges. However, the optimum values of them suitable for the demanded specifications must set, taking the CSS tangential force and flying height of the magnetic head 19 into consideration.

### (Embodiment 3)

In the foregoing embodiments 1 and 2, since the projections 4b (B) present in the CSS zone 2 as mixed with the tallest projections 4a (A) are formed simultaneously with the projections 4c (C) in the data zone 3, the projections 4b become substantially equal in height to the projections 4c (C). In the embodiment 3, on the other hand, the projections B to be formed on the CSS zone 2 are different in height from the projections C to be formed on the data zone 3. Explanation will be made as to a process for fabricating a magnetic disk 1 having such a surface configuration and as to new effects thereof.

A disk was fabricated under such conditions that, as one example of the surface configuration, the projections A were set to have a height of 16nm, the projections B were to have a height of 8nm, the projections C were to have a height of 4nm, the respective projections A, B and C were to have a size of about 2µm, the projections A were to have a density of about 3.5 x 10³ projections/mm², the projections B were to have a density of about 1.5 x 10⁵ projections/mm², and the projections C were to have a density of about 2.7 x 10³ projections/mm². At this time, the projections A had an area ratio of about 1.1%, the projections B had an area ratio of about 47%, and the projections C had an area ratio of about 0.8%.

The above fabrication process will be explained below. This process is substantially the same as the process of Figs. 4, 5 and 6 exemplified in the embodiments 1 and 2.

First of all, a magnetic disk 1 comprising a disk substrate and a magnetic recording film an carbon protective film 6 sequentially laminated on the substrate is covered with the mask members 11a and 11b so that only the CSS zone 2 located in its inner peripheral side is exposed, and then the CSS zone 2 of the magnetic disk 1 is selectively coated with the fluorine plastic particles 13 to have a particle density of about 3.5 x 10³ projections/mm² (an area ratio of about 1.1%). In this case, the coated fluorine plastic particles 13 act as a mask to form projections A. Thereafter, the substrate is subjected to a dry etching process with use of the oxygen gas to remove the protective film 6 of the magnetic disk 1 by 8nm and to thereby form first projections A which play a role of reducing the CSS tangential force and avoiding the head adhesion.

Next, the above magnetic disk 1 having the fluorine plastic particles 13 still remaining thereon is again covered with the mask members 11 with only the CSS zone 2 opened or exposed to the outside, and only the CSS zone 2 is coated with the fluorine plastic particles 13 to have a particle density of about 1.5 x 10⁵ projections/mm² (area ratio of about 47%). Thereafter, the magnetic disk 1 is subjected to the dry etching process to remove the protective film 6 of the magnetic disk 1 by an additional amount of 4nm to thereby form second projections B acting to rise the flying reference plane.

Further, the mask members 11a and 11b for formation of the CSS zone are removed, and the magnetic disk 1 having the fluorine plastic particles 13 still remaining thereon is coated on the entire protective film 6 with the fluorine plastic particles 13 as a mask to have a particle density of about 2.7 x 10³ projections/mm² (area ratio of about 0.8%). After this, the entire protective film 6 of the magnetic disk 1 is again subjected to the dry etching process with use of the oxygen gas to remove the protective film 6 by 4nm and form third projections C.

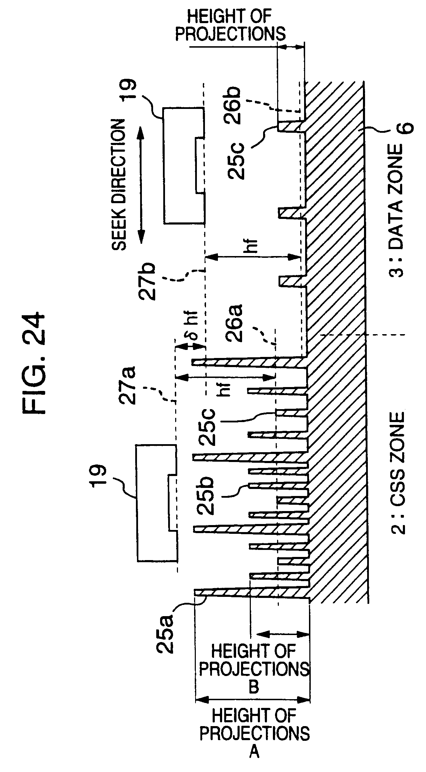

Subsequently, the protective film 6 is subjected to the scrubbing and washing operation to remove the fluorine plastic particles 13 remaining on the protective film 6, and then coated thereon with lubricant to obtain a magnetic disk 1 having such a sectional configuration as shown in Fig. 24.

Through the above steps of the process, there can be obtained a magnetic disk 1 having the projections different sorts of controlled heights formed thereon.

An example of the load curve of the CSS zone 2 provided on the inner peripheral side of the magnetic disk 1 according to the present embodiment is shown in Fig. 25. The illustrated load curve is featured by drawing a 3-step-like curve because of the randomly mixed provision of the projections A playing a role of avoiding the head adhesion and reducing the CSS tangential force, the projections B playing a role of rising the flying reference plane in the CSS zone 2, and the projections C having the same height as those in the data zone 3.

More in detail, a first step part of this load curve, i.e., the part within a load ratio range of from 0 to about 1.1%, which results from the projections A, plays a role of avoiding the head adhesion in the CSS zone 2 and reducing the CSS tangential force. A second step part of the load curve appearing within a load ratio range of from about 1.1% to about 47%, which results from the projections B, is characterized by playing a role of rising the flying reference plane of the head. A shoulder-like part of the load curve appearing in the vicinity of a load ratio of about 50%, which results from the projections C provided on the data zone, will not affect the rising or flying of the magnetic head 19 because of a low area ratio. It has been already confirmed that, even when the flying amount is small (25nm or less), the head flying stability can be effectively improved.

From the load curve shown in Fig. 25, a load ratio including the projections A, B and C is about 49%. When the magnetic head 19 was made to actually fly and measured with respect to its flying reference plane height in the CSS zone 2, a flying reference plane rise of about 4nm had been confirmed which is nearly equal to a product of the projection area ratio and projection height.

For this reason, in the case where the head flying height hf is 15nm for example, even when the projections A have a height of 16nm, there will not occur any continuous contact between the magnetic head 19 and projections A.

Further, since the height of the projections C of the data zone 3 can be controlled independently of the other projections provided on the CSS zone 2, it is possible to adjust the height of the projections A to such a minimum height as to secure the flying stability of the magnetic head 19 in the data zone 3. Therefore, in the data zone 3, a gap between the magnetic head 19 and projections C can be enlarged, that is, a flying margin can be made large. This contributes to prevention of a sliding fault such as head crash in the magnetic disk unit and thus leads to improvement in the reliability of the magnetic disk unit.

For comparison of the magnetic disk of the present invention with a conventional magnetic disk, magnetic disks having no such projections B and C were fabricated as comparative examples and measured with respect to sliding reliability. In this case, in the both magnetic disks, the projections A were formed to have a particle density of about 3.5 x 10³ projections/mm² (area ratio of about 1.1%) and a height of 16nm.

With regard to each of the magnetic disks of the present invention and comparative example, the magnetic head 19 was positioned in the CSS zone 2, the magnetic disk 1 was rotated at a speed of 300rpm to be continuously slidingly contacted with the head, and then measured with respect to sliding strength. Under this sliding conditions (rotational speed being 300rpm, linear speed being 0.63m/sec.), the magnetic head 19 does not float and is merely sliding along the top of the projections A via the lubricant. The sliding strength comparison was judged by the pass frequency through which the magnetic disk 1 finally crashes. In this connection, the number of the magnetic disks 1 of the present invention and comparative example to be tested was each 10.

As a result, all the conventional magnetic disks 1 having no such projections B and C crushed through about 25,000 to 40,000 passes. All 10 of the magnetic disks of the present invention did not crash even through 60,000 passes. This is considered to be because the lubricant is being fed from the different-height projections B and C onto the top of the projections A carrying the magnetic head 19 in the CSS zone 2.

In this way, the magnetic disk 1 having the load curve of the present invention, which is clearly distinguished from the magnetic disk having the conventional load curve, produces excellent effects including low flying amount of the magnetic head 19 and improved sliding strength.

As has been mentioned in the foregoing, in accordance with the foregoing respective embodiments of the present invention, since the projections having different suitable functions are formed on the CSS and data zones of the magnetic disk, the magnetic disk unit having such magnetic disks built therein can improve its CSS characteristic, head adhesion and the low flying characteristic of the magnetic head, whereby the magnetic disk unit can realize a high recording density and can remarkably improve a sliding reliability.

That is, in order to improve the sliding reliability with the magnetic head in the CSS zone, the projections to be formed in the CSS zone are set to be taller than those to be formed in the data zone. In addition, the load ratio BR5 indicative of the contact condition with the magnetic head is set to be larger than that of the data zone to improve the head adhesion.

In the data zone, since the projections having such a height as not to deteriorate the flying characteristic of the magnetic head are formed and at least one of the projections forms the sliding plane of the magnetic head, the damage of the magnetic head to the surface of the disk in an unstable flying condition of the head can be avoided.

Further, since the adjustment of the height, size and density of the projections in the CSS and data zones causes the difference between the average heights of magnetic disk including the projections as viewed from the magnetic head to be within 10nm, the reliability of the magnetic disk can be improved to a large extent without involving any deterioration of the flying characteristic of the magnetic head during the seeking operation of the magnetic head over the CSS and data zones.

Since the CSS zone having the surface configuration indicative of the load curve of the present invention is provided to the magnetic disk, the average plane height of the CSS zone can be made higher than that of the data zone and the flying reference plane of the CSS zone can be made higher than that of the data zone. In other words, when the flying reference plane of the CSS zone is raised, a flying margin from the projection height to the head flying height in the CSS zone can be made wide. This results in that the contact frequency between the magnetic head and the projections in the CSS zone is reduced to improve the CSS reliability. In particular, in a very-low flying zone where the head flying height from the flying reference plane is 30nm or less, the height of the projections in the CSS zone may cause a flying trouble. In the magnetic disk of the present invention, however, the projections of the CSS zone enable the avoidance of the head adhesion, the reduction of the tangential force in the CSS mode and also the realization of the flying as low as 30nm or less. Further, the flying amount of the magnetic head in the data zone enables the reduction of the height of the projections of the CSS zone and thus the magnetic disk can realize a high recording density.

When the magnetic head is made up of an MR head, since generation of the thermal asperities caused by the contact between the MR head and the projections of the CSS zone can be suppressed even in the CSS zone, information on the CSS zone can be reproduced like the data zone.

Although the present invention made by the inventors of the present application has been explained in detail in connection with its embodiments, the present invention is not limited to the specific examples but may be modified in various ways without departing from the gist of the invention.

For example, though explanation has been made as to the technique for forming on the uppermost layer or protective film of the magnetic disk the projections which height, size and distribution density are accurately controlled as an example in the foregoing respective embodiments, the present invention includes a method for providing the above controlled projections to any one of the layers underside of the protective film or onto the underlying substrate in such a manner that the projections are reflected on the surface configuration of the magnetic disk.

The above explanation has been made in connection with the case where the CSS zone is provided on the inner peripheral side of the magnetic disk, but the present invention can include such arrangements that the CSS zone is provided on the outer peripheral side or on both of the inner and outer peripheral sides of the magnetic disk.

The above explanation has been made in connection with the example wherein the protective film is made of carbon in the foregoing embodiments, but the protective film may be made of carbon formed like diamond, diamond or oxide or carbide such as SiO₂ or SiC.

## Claims

1. A magnetic disk (1) comprising a first zone (2) and a second zone (3), said first zone (2) being formed thereon with a plurality of first projections (4a) isolated from each other and having a predetermined height and with a plurality of second projections (4b) isolated from each other and having a height shorter than said first projections (4a), said second zone (3) being formed thereon with a plurality of third projections (4c) isolated from each other and having a height shorter than said first projections (4a).

2. A magnetic disk (1) as set forth in claim 1, wherein said first projections (4a) in said first zone (2) have a height of from 15nm to 30nm both inclusive and have a size of 10µm or less, a part of a load curve obtained from a cross-sectional curve on a surface of said magnetic disk indicative of a contact condition with a magnetic head, which is located between a top of said cross-sectional curve and a height of 5nm therefrom, has a load ratio BR5 of 0.1-10%, said third projections (4c) in said second zone (3) have a height of from at least 5nm to less than 15nm, said third projections (4c) have a size of 10µm or less, and said load ratio BR5 is smaller than the load ratio BR5 in said first zone.

3. A magnetic disk as set forth in claim 1, wherein said first projections (4a) in said first zone (2) have a height of from 20nm to 30nm both inclusive and have a size of 4µm or less, a part of a load curve obtained from a cross-sectional curve on a surface of said magnetic disk indicative of a contact condition with a magnetic head, which is located between a top of said cross-sectional curve and a height of 5nm therefrom, has a load ratio BR5 of 0.1-10%, said third projections (4c) in said second zone (3) have a height of from 5nm to 15nm both inclusive, said third projections have a size of 4µm or less, and said load ratio BR5 is smaller than the load ratio BR5 in said first zone.

4. A magnetic disk as set forth in claim 1, wherein a difference between average plane heights of the projections of said first and second zones (2, 3) obtained by averaging surface roughnesses of said first and second zones is 10nm or less.

5. A magnetic disk as set forth in claim 1, wherein a difference between average plane heights of the projections of said first and second zones (2, 3) obtained by averaging surface roughnesses of said first and second zones is 4nm or less.

6. A method for fabricating a magnetic disk (1) comprising the steps of:
attaching fine particles (13) onto at least part of a major surface of a magnetic disk (12); and
subjecting said magnetic disk to an etching process with said fine particles used as a mask,
wherein said two steps are repeated at least twice.

7. A method for fabricating a magnetic disk comprising the steps of:
forming a backing film (8) on a substrate (10);
forming a magnetic film (7) on said backing film;
forming a protective film (6) on said magnetic film;
dividing a surface of said protective film into at least first and second zones (2, 3) and selectively attaching first fine particles (13) of a desired size onto said first zone (2) at a desired density;
etching said first and second zones with said first particles used as a mask;
attaching second fine particles (13) of a desired size onto said first and second zones at a desired density;
etching said first and second zones with said first and second particles used as masks;
removing said first and second fine particles; and
forming a lubricant film (5) on said protective film.

8. A method for fabricating a magnetic disk (1) comprising the steps of:
forming a backing film (8) on a substrate (10);
forming a magnetic film (7) on said backing film;
forming a protective film (6) on said magnetic film;
dividing a surface of said protective film into at least first and second zones (2, 3) and selectively attaching first fine particles (13) of a desired size onto said first zone (2) at a desired density;
etching said first and second zones with said first particles used as a mask;
selectively attaching second fine particles (13) of a desired size onto said first zone at a desired density;
attaching third fine particles (13) of a desired size onto said first and second zones at a desired density;
etching said first and second zones with said first to third particles used as masks;
removing said first to third fine particles; and
forming a lubricant film (5) on said protective film.

9. A method for fabricating a magnetic disk comprising the steps of:
forming a backing film (8) on a substrate (10);
forming a magnetic film (7) on said backing film;
forming a protective film (6) on said magnetic film;
dividing a surface of said protective film into at least first and second zones (2, 3) and selectively attaching first fine particles (13) of a desired size onto said first zone (2) at a desired density;
etching said first and second zones (3) with said first particles used as a mask;
selectively attaching second fine particles (13) of a desired size onto said first zone at a desired density;
etching said first and second zones with said first and second fine particles as masks;
attaching third fine particles (13) of a desired size onto said first and second zones at a desired density;
etching said first and second zones with said first to third particles used as masks;
removing said first to third fine particles; and
forming a lubricant film (5) on said protective film.

10. A magnetic disk unit comprising:
a magnetic disk (1);
disk driving means (21) for rotatably driving said magnetic disk;
a magnetic head (19) for performing recording and reproducing operations of information over said magnetic disk; and
positioning means (22, 23) for positioning said magnetic head (19) at a desired position on the magnetic disk in a radial direction thereof,
wherein said magnetic disk has first and second zones (2, 3), said first zone (2) is formed thereon with a plurality of first projections (4a) isolated from each other and having a predetermined height and second projections (4b) isolated from each other and having a predetermined height lower than said first projections, said second zone is formed thereon with a plurality of third projections (4c) isolated from each other and having a height lower than said first projections, contact start stop (CSS) operation is carried out to shift said magnetic disk between a contact state thereof with said magnetic disk and a flying state thereof in said first zone, and said magnetic disk in said flying state performs said information recording and reproducing operations in said second zone.

11. A magnetic disk unit comprising:
a magnetic disk (1);
disk driving means (21) for rotatably driving said magnetic disk;
a magnetic head (19) for performing recording and reproducing operations of information over said magnetic disk; and
positioning means (22, 23) for positioning said magnetic head at a desired position on the magnetic disk in a radial direction thereof,
wherein said magnetic disk (1) has first and second zones (2, 3), said first zone (2) is formed thereon with a plurality of first projections (4a) isolated from each other and having a predetermined height and second projections (4b) isolated from each other and having a predetermined height lower than said first projections, said second zone (3) is formed thereon with a plurality of third projections (4c) isolated from each other and having a height lower than said first projections, said first projections in said first zone have a height of 15nm-30nm and a size of 10µm or less, a part of a load curve obtained from a cross-sectional curve on a surface of said magnetic disk indicative of a contact condition with a magnetic head, which is located between a top of said cross-sectional curve and a height of 5nm therefrom, has a load ratio BR5 of 0.1-10%, said third projections in said second zone have a height of 5nm-15nm, said third projections have a size of 10µm or less, and said load ratio BR5 is smaller than the load ratio BR5 in said first zone, contact start stop (CSS) operation is carried out to shift said magnetic disk between a contact state thereof with said magnetic disk and a flying state thereof in said first zone, and said magnetic disk in said flying state performs said information recording and reproducing operations in said second zone.

12. A magnetic disk unit comprising:
a magnetic disk (1);
disk driving means (21) for rotatably driving said magnetic disk;
a magnetic head (19) for performing recording and reproducing operations of information over said magnetic disk; and
positioning means (22, 23) for positioning said magnetic head (19) at a desired position on the magnetic disk (1) in a radial direction thereof,
wherein said magnetic disk has first and second zones (2, 3), said first zone (2) is formed thereon with a plurality of first projections (4a) isolated from each other and having a predetermined height and second projections (4b) isolated from each other and having a predetermined height lower than said first projections, said second zone (3) is formed thereon with a plurality of third projections (4c) isolated from each other and having a height lower than said first projections, a difference between average plane heights of the projections of said first and second zones obtained by averaging surface roughnesses of said first and second zones is 10nm or less, contact start stop (CSS) operation is carried out to shift said magnetic disk between a contact state thereof with said magnetic disk and a flying state thereof in said first zone, and said magnetic disk in said flying state performs said information recording and reproducing operations in said second zone.
